# EUROPEAN PATENT SPECIFICATION

(11) **EP 2 390 518 B1**
(45) Date of publication and mention of the grant of the patent: **24.06.2015**
(21) Application number: 11165356.4
(22) Date of filing: 09.05.2011
(51) Int. Cl.: F16B 47/00

(54) **Suction cup assembly**
Saugglockenanordnung
Ensemble de ventouse

(30) Priority: 28.05.2010 DE 202010005517 U
(43) Date of publication of application: 30.11.2011
(73) Proprietor: Chen, Lung-Chih, Tanzih Township T'ai chung (TW)
(72) Inventor: Chen, Lung-Chih, Tanzih Township T'ai chung (TW)
(74) Representative: Lang, Christian

(56) References cited:
- WO-A1-2007/061171
- DE-U1-202009 015 242
- US-A1- 2008 230 662
- US-A1- 2010 012 800

## Description

### BACKGROUND OF THE INVENTION

### 1. Field of the Invention

The present invention relates to a suction cup assembly according to the preamble of claim 1, especially to a suction cup assembly that can be attached to a rough surface. Such a suction cup assembly is known from US 2008/0230662 A1.

### 2. Description of Related Art

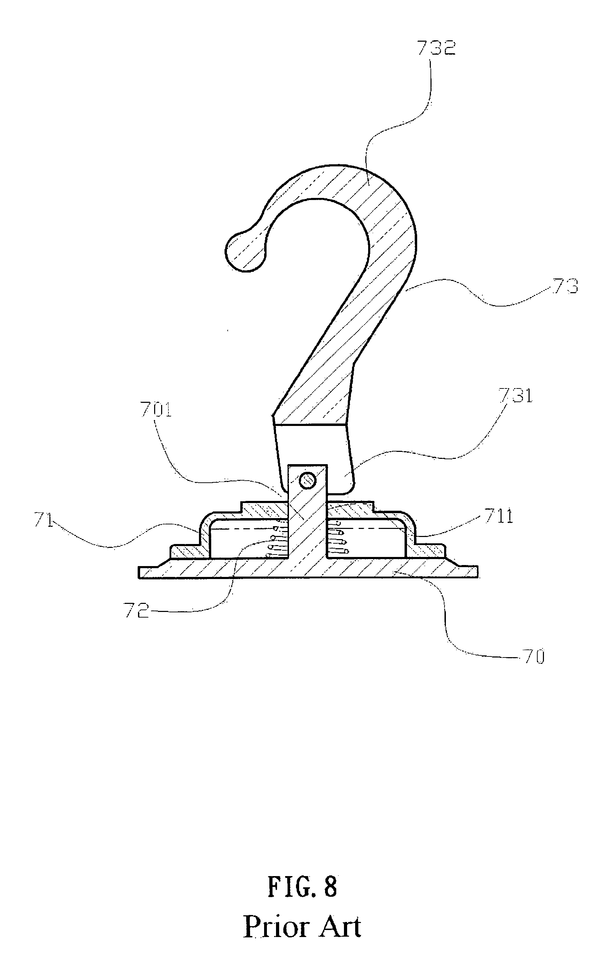

A suction cup can adhere to a flat and non-porous surface quickly and conveniently, with no drilling or nails. Thus the suction cups have a great number of applications. They are used to secure objects in bathrooms, kitchens, vehicles or to glass surfaces. In some machining centers, suction cups are also used to affix workpiece. However, the suction cup adhered by a vacuum effect may come loose in time due to time or weight of the object. The suction force is not large enough and the load limit is lowered. Thus parts for increasing the suction force and the load limit are provided. Refer to Fig. 8, a suction cup assembly is formed by a suction cup 70, a fixed base 71, a spring 72 and a control handle 73. The suction cup 70 adheres to smooth and flat surfaces and a suction force is created due to lower pressure. A bar 701 extends from a top of the center of the suction cup 70. The fixed base 71 is a cover with an insertion hole 711 on the center thereof. A plurality of members for holding or locking objects is disposed around the insertion hole 711 of the fixed base 71. As to the control handle 73, it includes an eccentric part 731 arranged at the pivoted and connected area and a pull part 732 extending from top of the eccentric part 731.

While being assembled, the spring 72 is around the bar 701 of the suction cup 70 while the bar 701 of the suction cup 70 is inserted through the insertion hole 711 of the fixed base 71 so that the suction cup 70 is covered by the fixed base 71. Then the control handle 73 is pivoted to the bar 701 of the suction cup 70 that passes through the fixed base 71. When the suction cup 70 is adhered to a smooth flat surface, the control handle 73 is used to pull the suction cup 70 under the control of the pull part 732 by the eccentric part 731 pressed against the fixed base 71 so as to create a vacuum within the suction cup 70. Moreover, the periphery of the suction cup 70 is pressed by the fixed base 71. By such press and pull design, the suction cup 70 is attached to the smooth flat surface more precisely.

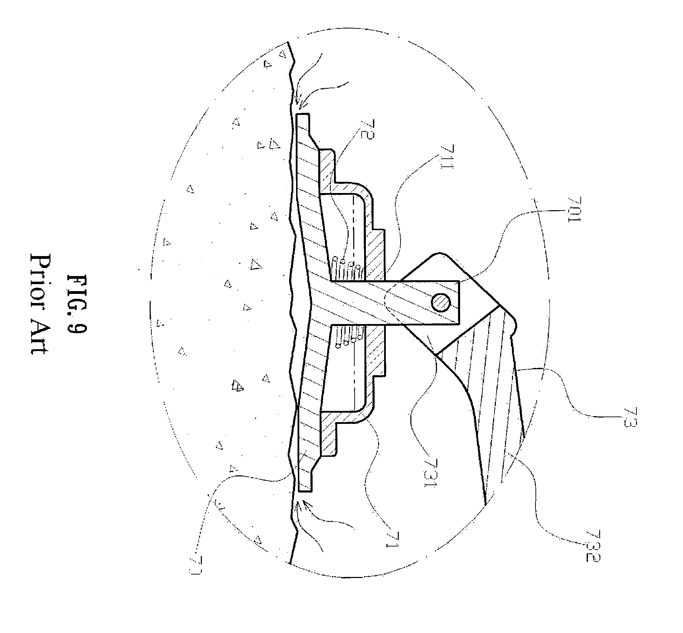

Although the above suction cup 70 can be attached to a smooth flat surface, it may not work while being applied to a rough surface such as a wall surface because the rough surface prevents the edges of the suction cup from creating a seal, allowing air flowing from external into internal of the suction cup 70 and the vacuum no longer maintained, as shown in Fig. 9. Thus the applications of the suction cup are limited.

US 200810230662 A1 describes a suction cup including a shape retaining member with a centre stem and a suction cup body made of gel which surrounds the shape retaining member. The suction cup further includes an attaching base which covers the shape retaining member wherein the centre stem is inserted through a hole in the attachment base, and a handle which has two portions forming an opening therebetween for receiving the rod which is connected to the handle by a shaft. The described suction cup has the disadvantage that during the operation of the handle the rod can be bent so that the shape retaining member is removed partially away from the object the be fixed to and so that the vacuum to be produced can be destroyed.

### SUMMARY OF THE INVENTION

Starting from the state of the art it is the object of the present invention to provide a suction cup which can be securely attached to an object without the risk of destroying a vacuum during the operation of the handle. It is a further object of the present invention to provide a suction cup assembly that can be applied to rough surfaces of objects and attached to the rough surfaces smoothly.

In order to achieve the above object, a suction cup assembly according to claim 1 is proposed and includes a suction cup, a spring, a fixed base, a control handle, and a coiled ring. The suction cup consists of a first layer and a second layer connected with each other. The first layer is softer and elastic, used to be in contact with a surface of an object. The second layer is harder and used for maintaining the shape while being against by the fixed base and deformed for creating a vacuum. Moreover, a rod with a pivot hole extends from a center of the second layer. The fixed base is a cover having an insertion hole on a center thereof. A hollow cylindrical housing is arranged at the top of the fixed base projectingly, on the position corresponding to the insertion hole. A groove is mounted on each of two sides of the housing, parallel to an axis of the housing. A hook hole is disposed on one end of the housing and a hook extends from the housing. The control handle consists of a pivot part disposed on one end thereof and a pull part extending from the other thereof. The pivot part, having pivot holes and an opening, is eccentric and projecting. The coiled ring is formed by a strip being coiled while the strip has different styles. Each of two ends of the coiled ring can be pulled out to form an insertion end.

Compared with suction cups available now, the suction cup assembly of the present invention can be applied to various objects and more prevalent. While being attached to a rougher surface of an object, the elastic deformation of the first layer allows the edges of the suction cup to be sealed. Thus no air is flowing from external into internal of the suction cup and a vacuum is created. Moreover, the second layer can maintain the shape. Thus the suction cup is attached firmly.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a perspective view of an embodiment according to the present invention;
Fig. 2 is an explosive view of an embodiment according to the present invention;
Fig. 3 is a cross sectional view of an assembled embodiment according to the present invention;
Fig. 4 is a partial enlarged cross sectional view of an embodiment attached to a rough surface while a vacuum is maintained according to the present invention;
Fig. 5 is a cross sectional view of another embodiment according to the present invention;
Fig. 6 is a cross sectional view of a further embodiment according to the present invention;
Fig. 7 is a schematic drawing showing a coiled ring that holds a key of an embodiment according to the present invention;
Fig. 8 is a cross sectional view of a prior art;
Fig. 9 is a schematic drawing showing that a vacuum is no longer maintained when a prior art is attached to a rough surface.

### DETAILED DESCRIPTION OF THE PREFERRED EMBODIMENT

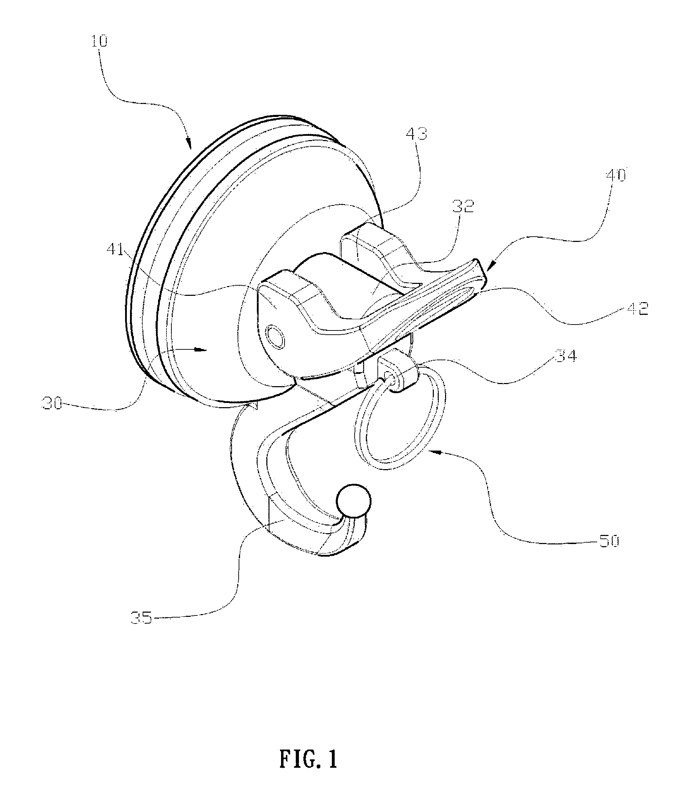

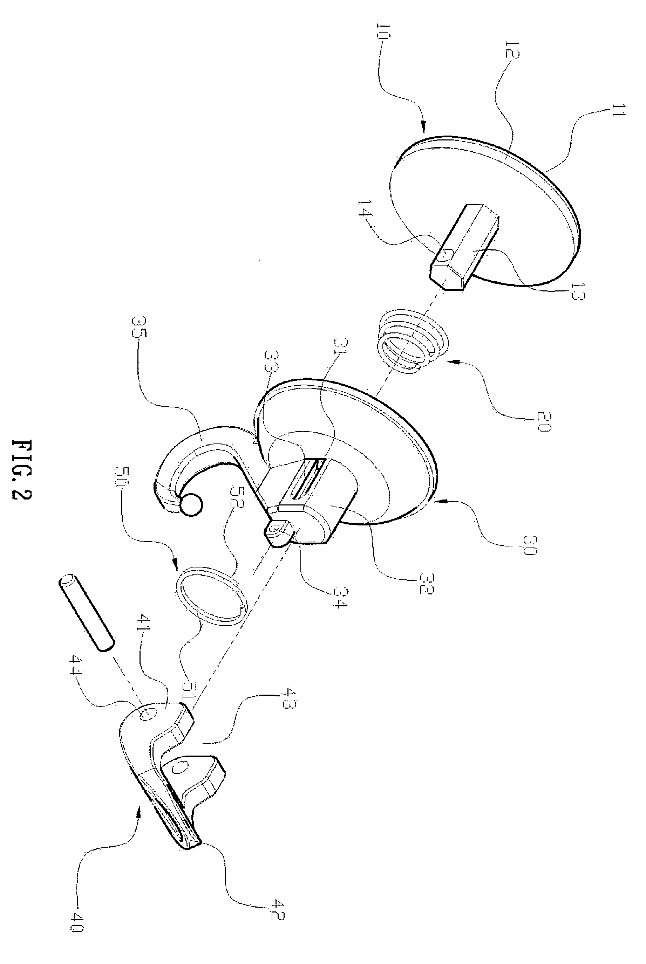

Refer to Fig. 1 and Fig. 2, a suction cup assembly of the present invention includes a suction cup 10, a spring 20, a fixed base 30, a control handle 40 and a coiled ring 50. The suction cup 10 is formed by a first layer 11 and a second layer 12. The first layer 11 is softer and elastic, used to be in contact with the surface directly. The second layer 12 is harder for maintaining the original shape while being pressed by the fixed base 30 and deformed to create the vacuum. A rod 13 with a pivot hole 14 is extending from a center of the second layer 12. The fixed base 30 is a cover with an insertion hole 31 on a center thereof. A hollow cylindrical housing 32 is arranged at the top of the fixed base 31 projectingly, on the position corresponding to the insertion hole 31. The hollow cylindrical housing 32 includes two grooves 33, a hook hole 34 on one end thereof, and a hook 35 extending therefrom. The grooves 33 are respectively mounted on each of two sides of the housing, parallel to an axis of the housing. The control handle 40 consists of a pivot part 41 on one end thereof, and a pull part 42 extending from the other end thereof. The pivot part 41 is eccentric and projecting, having two pivot holes 44 respectively on each of two sides thereof and an opening 43. The coiled ring 50 is formed by a strip 51 being coiled and the strip 51 can be in different styles. Each of two ends of the coiled ring 50 can be pulled out to form an insertion end 52 for holding things.

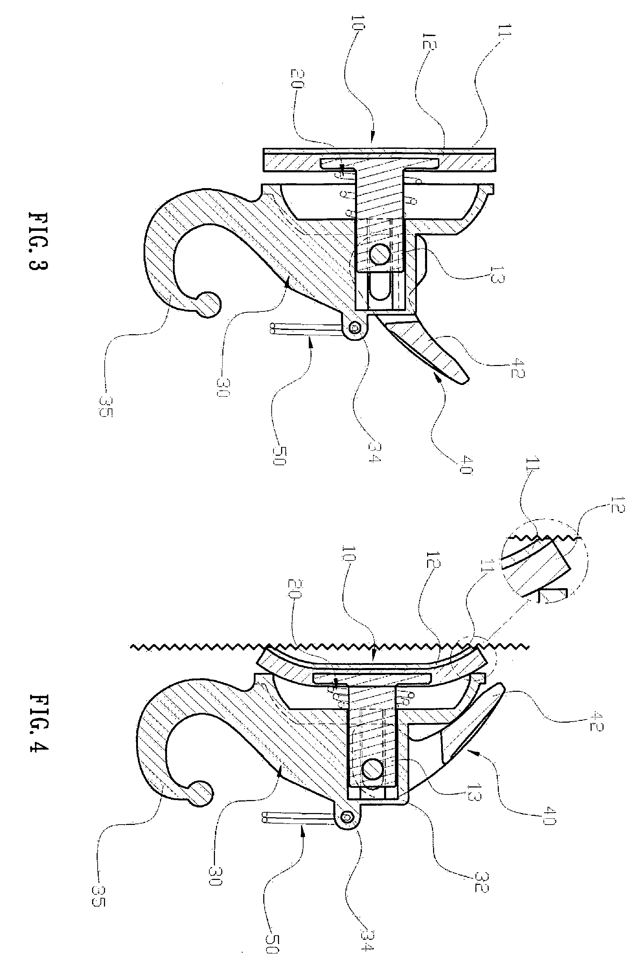

Refer to Fig. 1 and Fig. 3, the spring 20 is arranged around the rod 13 of the suction cup 10. The rod 13 of the suction cup 10 is inserted through the insertion hole 31 of the fixed base 30 and mounted into the housing 32 so that the suction cup 10 is covered by the fixed base 30. Then the control handle 40 is set outside the housing 32 by the opening 43. By a shaft passing through the corresponding pivot holes 14, 44 and the grooves 33, the control handle 40 and the rod 13 of the suction cup 10 are pivoted to the fixed base 30. At last, the insertion end 52 of the coiled ring 50 is pulled out to pass through the hook hole 34 of the fixed base 30. The assembling of the suction cup assembly is completed.

In use, firstly attach the first layer 11 of the suction cup 10 to a smooth flat surface and then operate the pull part 42 to make the control handle 40 lean against the fixed base 30 by edges of the eccentric pivot part 41 for pulling the suction cup 10 outward and creating a vacuum within the suction cup 10. The periphery of the suction cup 10 is pressed by the fixed base 30. By the press and pull design, the suction cup 10 is attached to the smooth flat surface securely. While being applied to a rougher surface of an object, the elastic deformation of the first layer 11 allows the edges of the suction cup 10 to be sealed, as shown in Fig. 4. No air is flowing from external into internal of the suction cup 10 and a vacuum is generated. In combination with the second layer 12 that maintains the shape, the suction cup 10 can stay in place. Thus the suction cup 10 of the present invention is applied to various objects and is much more prevalent.

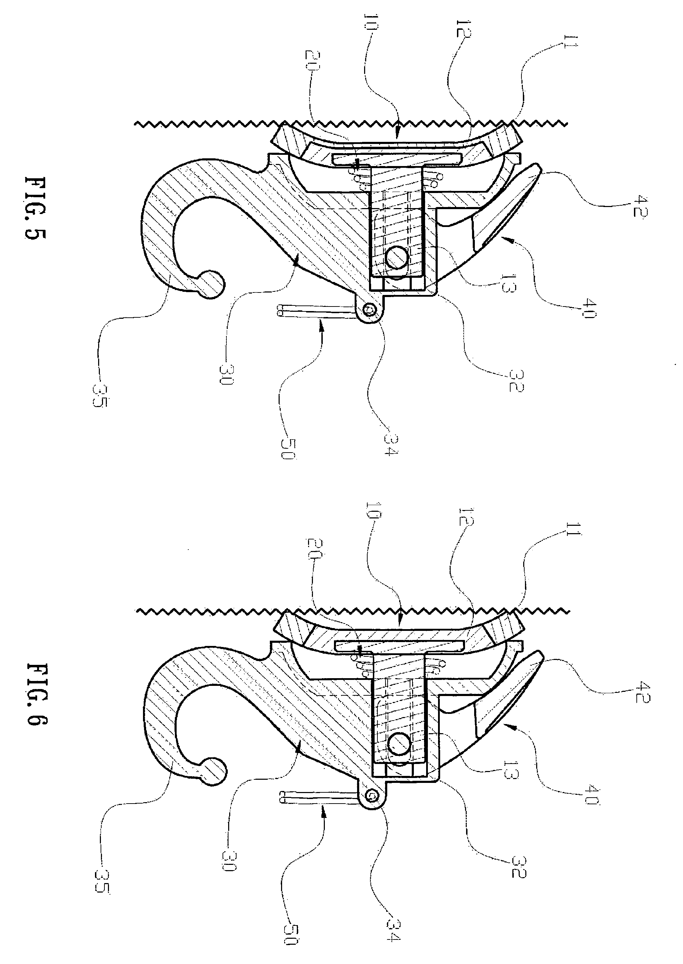

Furthermore, the second layer 12 and the first layer 11, overlapped (shown from Fig. 1 to Fig. 4) or mounted and connected with each other (Fig. 5), are respectively arranged at an upper part and a lower part of the suction cup 10. Refer to Fig. 6, the first layer 11 and the second layer 12 are two concentric circles connected with each other. The first layer 11 is an outer circle and the second layer 12 is an inner circle. In use, the first layer 11 is in contact with the surface of the object.

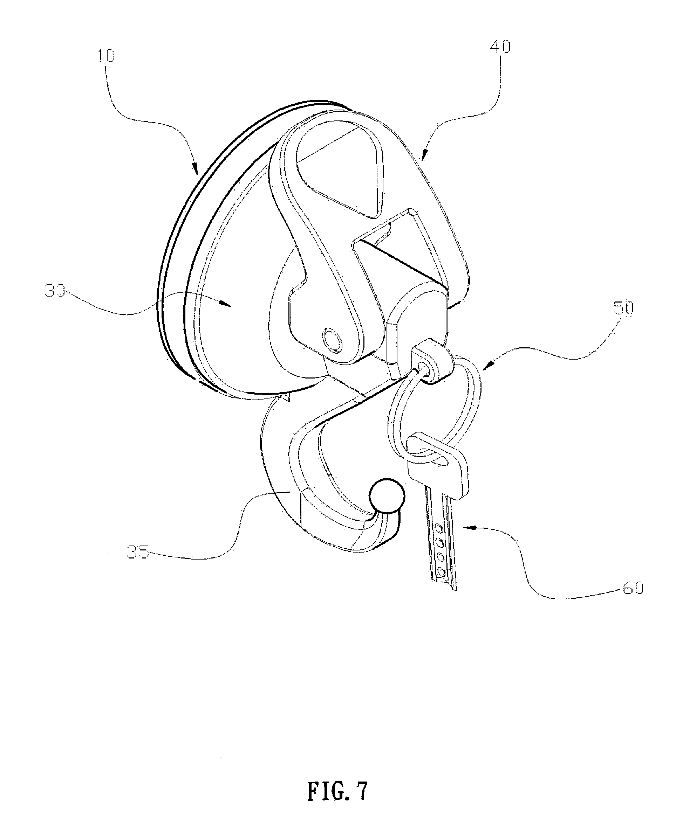

Refer to Fig. 7, firstly pull out the insertion end 52. Then insert a key 60 through the insertion end 52 of the coiled ring 50 to be held on the coiled ring 50. Moreover, the suction cup 10 works in a non-invasive attachment. There is no need to fix key racks by nails or glues, a time and labor consuming process. After being attached, the whole suction cup assembly, together with the coiled ring 50 and the key 60, can be removed quickly by pulling the control handle 40. Thus the key 60 is carried by users or is attached to the desired position again. The device is more flexible in use.

The suction cup assemblies of the present invention can be arranged at a certain interval. A chain for hanging things is disposed between the two adjacent coiled rings 50. The hook 35 of the fixed base 30 is also used to hold things. The present invention can be modified and used in various ways, having more functions derived.

In summary, the suction cup assembly of the present invention has following advantages. While being applied to a rougher surface of an object, the first layer 11 is deformed elastically so as to fill gaps between the suction cup 10 and the rougher surface. Thus the edges of the suction cup 10 are well-sealed and no air is flowing from external into internal of the suction cup 10. A vacuum is created. Moreover, the second layer 12 that maintains the shape also keeps the suction cup attached securely.

Therefore, the suction assembly of the present invention can be applied to different objects and become much more prevalent.

Additional advantages and modifications will readily occur to those skilled in the art. Therefore, the invention in its broader aspects is not limited to the specific details, and representative devices shown and described herein. Accordingly, various modifications may be made without departing from the scope of the appended claims.

## Claims

1. A suction cup assembly comprising a suction cup (10), a spring (20), a fixed base (30) and a control handle (40), wherein
the suction cup (10) includes a first layer (11) and a second layer (12), the first layer (11) being softer than the second layer and elastic, the first layer being configured to contact a surface of an object while the second layer (12) is harder for maintaining shape while being pressed by the fixed base (30) and deformed to create a vacuum; a rod (13), having a pivot hole (14), the rod extending from a center of the second layer (12);
the fixed base (30) is a cover having an insertion hole (31) on a center thereof;
the control handle (40) includes a pivot part (41) on one end and a pull part (42) extending from the other end thereof; the pivot part (41), including pivot holes (44) and an opening (43), and is eccentric and projecting;
the spring (20) is arranged around the rod (13) of the suction cup (10) and the suction cup (10) is covered by the fixed base (30) with the rod (13) being inserted through the insertion hole (31) of the fixed base (30) while the control handle (40) is pivoted to the rod (13) of the suction cup (10) by a shaft passing through the pivot holes (44), and
wherein the first layer (11) of the suction cup (10) is connected to the second layer (12) of the suction cup (10);
**characterized in that**
a hollow cylindrical housing (32) projects from a top of the fixed base (30) and corresponding to the insertion hole (31), the hollow cylindrical housing being configured to slidably support the rod (13) passed through the insertion hole (31) of the fixed base; and
a groove (33) is mounted on each of two sides of the housing (32), parallel to an axis of the housing (32),
wherein the control handle (40) is set outside the housing (32) with the housing (32) partially disposed in the opening (43), and the control handle (40) and the rod (13) of the suction cup (10) are both movable relative to the fixed base (30) by a shaft (45) passing through the pivot holes (44) and the grooves (33).

2. The device as claimed in claim 1, wherein the second layer (12) and the first layer (11) are overlapped with each other, respectively disposed on an upper part and a lower part of the suction cup (10).

3. The device as claimed in claim 1, wherein the second layer (12) and the first layer (11) are mounted and connected to each other, respectively disposed on an upper part and a lower part of the suction cup (10).

4. The device as claimed in claim 1, wherein the first layer (11) and the second layer (12) are concentric circles connected with each other while the first layer (11) is an outer circle, and the second layer (12) is an inner circle.

5. The device as claimed in claim 1, wherein a hook hole (34) is disposed on one end of the housing and the hook hole (34) is passed through by a coiled ring (50).

6. The device as claimed in claim 1, wherein a book (35) extends from the housing (32).

## Patentansprüche

1. Saugglockenanordnung mit einer Saugglocke (10), einer Feder (20), einer festen Basis (30) und einem Bediengriff (40), wobei
die Saugglocke (10) eine erste Schicht (11) und eine zweite Schicht (12) umfasst, wobei die erste Schicht (11) weicher als die zweite Schicht und elastisch ist, wobei die erste Schicht so ausgebildet ist, dass sie mit einer Oberfläche eines Objekts in Kontakt steht, wobei die zweite Schicht (12) härter ausgebildet ist, sodass die Grundform erhalten werden kann, selbst wenn sie durch die feste Basis (30) gedrückt wird und verformt wird, um ein Vakuum zu erzeugen, wobei ferner ein Stab (13) vorgesehen ist, der eine Scharnierbohrung (14) beinhaltet, wobei sich der Stab ausgehend von der Mitte der zweiten Schicht (12) erstreckt,
die feste Basis (30) eine Abdeckung ist, in deren Mitte eine Einstecköffnung (31) ausgebildet ist,
der Bediengriff (40) an einem Ende ein Schwenkstück (41) und ein Zugstück (42) umfasst, das sich ausgehend von dessen anderem Ende erstreckt, wobei das Schwenkstück (41) Scharnierbohrungen (44) und eine Öffnung (43) beinhaltet und exzentrisch und hervorstehend ausgebildet ist,
die Feder (20) um den Stab (13) der Saugglocke (10) angeordnet ist, wobei die Saugglocke (10) von der festen Basis (30) bedeckt wird, wobei der Stab (13) durch die Einstecköffnung (31) der festen Basis (30) gesteckt ist, während der Bediengriff (40) mittels eines Schafts, der durch die Scharnierbohrungen (44) hindurch verläuft, an dem Stab (13) der Saugglocke (10) angelenkt ist, und
wobei die erste Schicht (11) der Saugglocke (10) mit der zweiten Schicht (12) der Saugglocke (10) verbunden ist,
**dadurch gekennzeichnet, dass**
ein hohles zylindrisches Gehäuse (32) von einer Oberseite der festen Basis (30) hervorsteht und fluchtend mit der Einstecköffnung (31) ausgebildet ist, wobei das hohle zylindrische Gehäuse derart ausgebildet ist, den Stab (13), welcher in die Einstecköffnung (31) der festen Basis eingesteckt ist, verschiebbar zu lagern, und dass
an jeder der beiden Seiten des Gehäuses (32) eine Nut (33) parallel zu einer Achse des Gehäuses (32) ausgebildet ist,
wobei der Bediengriff (40) außen an dem Gehäuse (32) angeordnet ist, wobei das Gehäuse (32) teilweise in der Öffnung (43) aufgenommen ist, und wobei der Bediengriff (40) und der Stab (13) der Saugglocke (10) beide durch einen Schaft (45), der durch die Scharnierbohrungen (44) und die Nuten (33) hindurchgesteckt ist, relativ zur festen Basis (30) bewegbar sind.

2. Anordnung nach Anspruch 1, wobei die zweite Schicht (12) und die erste Schicht (11) miteinander überlappend ausgebildet sind und jeweils an einem oberen Teil und einem unteren Teil der Saugglocke (10) angeordnet sind.

3. Anordnung nach Anspruch 1, wobei die zweite Schicht (12) und die erste Schicht (11) aneinander befestigt und miteinander verbunden sind und jeweils an einem oberen Teil und einem unteren Teil der Saugglocke (10) angeordnet sind.

4. Anordnung nach Anspruch 1, wobei die erste Schicht (11) und die zweite Schicht (12) als konzentrische Kreise ausgebildet sind, die miteinander verbunden sind, wobei die erste Schicht (11) einen Außenkreis und die zweite Schicht (12) einen Innenkreis ausbildet.

5. Anordnung nach Anspruch 1, wobei ein Hakenloch (34) an einem Ende des Gehäuses ausgebildet ist, wobei ein Spiralring (50) durch das Hakenloch (34) hindurchgesteckt ist.

6. Anordnung nach Anspruch 1, wobei sich ein Haken (35) ausgehend von dem Gehäuse (32) erstreckt.

## Revendications

1. Ensemble à ventouse comprenant une ventouse (10), un ressort (20), une base fixe (30) et une poignée de commande (40), dans lequel
la ventouse (10) comprend une première couche (11) et une seconde couche (12), la première couche (11) étant plus molle que la seconde couche et élastique, la première couche étant configurée pour entrer en contact avec une surface d'un objet alors que la seconde couche (12) est plus dure pour le maintien de la forme tout en étant pressée par la base fixe (30) et déformée pour créer un vide ; une tige (13), comportant un trou de pivotement (14), la tige s'étendant à partir d'un centre de la seconde couche (12) ; la base fixe (30) est un couvercle ayant un trou d'insertion (31) sur un centre de celui-ci ;
la poignée de commande (40) comprend une partie de pivotement (41) sur une extrémité et une partie de traction (42) s'étendant à partir de l'autre extrémité de celle-ci ; la partie de pivotement (41) comprenant des trous de pivotement (44) et une ouverture (43), et est excentrique et en saillie ;
le ressort (20) est disposé autour de la tige (13) de la ventouse (10) et la ventouse (10) est couverte par la base fixe (30) avec la tige (13) étant insérée à travers le trou d'insertion (31) de la base fixe (30) tandis que la poignée de commande (40) est orientée vers la tige (13) de la ventouse (10) par un arbre traversant les trous de pivotement (44), et
dans lequel la première couche (11) de la ventouse (10) est reliée à la seconde couche (12) de la ventouse (10) ;
**caractérisé en ce que**
un boîtier cylindrique creux (32) fait saillie depuis le dessus de la base fixe (30) et correspondant au trou d'insertion (31), le boîtier cylindrique creux étant configuré pour supporter par coulissement la tige (13) ayant traversé le trou d'insertion (31) de la base fixe ; et
une rainure (33) est montée sur chacun des deux côtés du boîtier (32), parallèle à un axe du boîtier (32),
dans lequel la poignée de commande (40) est établie l'extérieur du boîtier (32) avec le boîtier (32) partiellement disposé dans l'ouverture (43), et la poignée de commande (40) et la tige (13) de la ventouse (10) sont toutes les deux mobiles par rapport à la base fixe (30) par un arbre (45) traversant les trous de pivotement (44) et les rainures (33).

2. Dispositif selon la revendication 1, dans lequel la seconde couche (12) et la première couche (11) sont mutuellement recouvertes, respectivement disposées sur une partie supérieure et une partie inférieure de la ventouse (10).

3. Dispositif selon la revendication 1, dans lequel la seconde couche (12) et la première couche (11) sont montées et mutuellement reliées, respectivement disposées sur une partie supérieure et une partie inférieure de la ventouse (10).

4. Dispositif selon la revendication 1, dans lequel la première couche (11) et la seconde couche (12) sont des cercles concentriques mutuellement reliés alors que la première couche (11) est un cercle extérieur, et la seconde couche (12) est un cercle intérieur.

5. Dispositif selon la revendication 1, dans lequel un trou de crochet (34) est disposé sur une extrémité du boîtier et le trou de crochet (34) est traversé par une bague enroulée (50).

6. Dispositif selon la revendication 1, dans lequel un crochet (35) s'étend à partir du boîtier (32).
